(19) Europäisches Patentamt
European Patent Office
Office européen des brevets

(11) **EP 4 614 385 A1**

(12) **EUROPEAN PATENT APPLICATION**

(43) Date of publication:
**10.09.2025 Bulletin 2025/37**

(21) Application number: **25160393.2**

(22) Date of filing: **26.02.2025**

(51) International Patent Classification (IPC):
*G06F 40/18* (2020.01)        *G06F 40/30* (2020.01)

(52) Cooperative Patent Classification (CPC):
**G06F 40/18; G06F 40/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2024 US 202418598154**

(71) Applicant: **Microsoft Technology Licensing, LLC
Redmond, WA 98052 (US)**

(72) Inventors:
• **HE, YEYE
Redmond, Washington (US)**

• **CUI, WEIWEI
Redmond, Washington (US)**
• **GE, SONG
Redmond, Washington (US)**
• **ZHANG, HAIDONG
Redmond, Washington (US)**
• **ZHANG, DONGMEI
Redmond, Washington (US)**
• **CHAUDHURI, SURAJIT
Redmond, Washington (US)**
• **CHEN, SIBEI
Redmond, Washington (US)**

(74) Representative: **CMS Cameron McKenna Nabarro
Olswang LLP
Cannon Place
78 Cannon Street
London EC4N 6AF (GB)**

(54) **RECOMMENDED FORMULAS IN SPREADSHEETS USING LEARNED TABLE REPRESENTATIONS**

(57)     The methods and systems provided herein automatically identify similar spreadsheets to target spreadsheets. The methods and systems automatically predict formulas that users want to author in a target cell of a target spreadsheet by identifying a reference formula from a similar region in a similar reference sheet that is similar to the target cell. The methods and systems generate a predicted formula by adapting parameters of a reference formula to a context of the target cell. The methods and systems provide an output with the predicted formula in the target cell of the target spreadsheet.

FIG. 2

**Description**

BACKGROUND

Spreadsheets are a popular end-user programming tools for tables, which blend the power of formula-based computation, with an intuitive table-based interface. Today, spreadsheets are used by billions of non-technical users to manipulate tables, most of whom are neither database experts nor professional programmers. Authoring complex formulas remains challenging, as non-technical users need to look up and understand non-trivial formula syntax.

BRIEF SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Some implementations relate to a method. The method includes automatically generating, by a machine learning model, training data with positive examples of similar spreadsheets and negative examples of dis-similar spreadsheets. The method includes using the training data, by a first machine learning model, to determine whether a pair of spreadsheets are similar. The method includes using the training data, by a second machine learning model, to identify similar spreadsheet regions between the pair of spreadsheets. The method includes providing a first output indicating the pair of spreadsheets are similar or dis-similar. The method includes providing a second output indicating whether the spreadsheets regions are similar or dis-similar between the pair of spreadsheets.

Some implementations relate to a device. The device includes a processor; memory in electronic communication with the processor; and instructions stored in the memory, the instructions being executable by the processor to: automatically generate, by a machine learning model, training data with positive examples of similar spreadsheets and negative examples of dis-similar spreadsheets; use the training data, by a first machine learning model, to determine whether a pair of spreadsheets are similar; use the training data, by a second machine learning model, to identify similar spreadsheet regions between the pair of spreadsheets; provide a first output indicating the pair of spreadsheets are similar or dis-similar; and provide a second output indicating whether the spreadsheets regions are similar or dis-similar between the pair of spreadsheets.

Some implementations relate to a method. The method includes receiving a target sheet with a target cell. The method includes identifying, using a first machine learning model, a reference sheet similar to the target sheet. The method includes identifying, using a second machine learning model, a similar region in the reference sheet that is similar to the target cell. The method includes identifying, using the second machine learning model, a reference formula in the similar region in response to receiving an indication a formula is being created in the target cell. The method includes modifying, using the second machine learning model, parameters of the reference formula to a context of the target sheet. The method includes generating, using the second machine learning model, a predicted formula with the modified parameters of the reference formula. The method includes providing an output in the target cell with the predicted formula.

Some implementations relate to a device. The device includes a processor; memory in electronic communication with the processor; and instructions stored in the memory, the instructions being executable by the processor to: receive a target sheet with a target cell; identify, using a first machine learning model, a reference sheet similar to the target sheet; identify, using a second machine learning model, a similar region in the reference sheet that is similar to the target cell; identify, using the second machine learning model, a reference formula in the similar region in response to receiving an indication a formula is being created in the target cell; modify, using the second machine learning model, parameters of the reference formula to a context of the target sheet; generate, using the second machine learning model, a predicted formula with the modified parameters of the reference formula; and provide an output in the target cell with the predicted formula.

Additional features and advantages will be set forth in the description which follows, and in part will be obvious from the description, or may be learned by the practice of the teachings herein. Features and advantages of the disclosure may be realized and obtained by means of the instruments and combinations particularly pointed out in the appended claims. Features of the present disclosure will become more fully apparent from the following description and appended claims or may be learned by the practice of the disclosure as set forth hereinafter.

BRIEF DESCRIPTION OF THE DRAWINGS

In order to describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:

Fig. 1 illustrates an example spreadsheet where a user is trying to author a new formula.

Fig. 2 illustrates an example environment for automatically recommending formulas for a spreadsheet in accordance with implementations of the present disclosure.

Fig. 3A illustrates an example of a high confidence of similar sheets with the same sheet names between a pair of spreadsheets in accordance with implementations of the present disclosure.

Fig. 3B illustrates an example of a low confidence of similar sheets with the same sheet names between a pair of spreadsheets in accordance with implementations of the present disclosure.

Fig. 3C illustrates an example of a low confidence of similar sheets with different sheet names between a pair of spreadsheets in accordance with implementations of the present disclosure.

Fig. 4 illustrates an example of a machine learning model architecture for spreadsheet representation in accordance with implementations of the present disclosure.

Fig. 5 illustrates example view windows for regions of a spreadsheet in accordance with implementations of the present disclosure.

Fig. 6 illustrates an example target sheet of a spreadsheet where a user is trying to author a new formula and an example reference sheet similar to the target sheet in accordance with implementations of the present disclosure.

Fig. 7 illustrates an example method for training machine learning models to identify similar spreadsheets or spreadsheet regions in accordance with implementations of the present disclosure.

Fig. 8 illustrates an example method for automatically recommending formulas for a spreadsheet in accordance with implementations of the present disclosure.

Fig. 9 illustrates components that may be included within a computer system.

## DETAILED DESCRIPTION

This disclosure generally relates to formulas in spreadsheets. Spreadsheets are an electronic document in which data is arranged in rows and columns of a grid and can be manipulated and used in calculations. Spreadsheets also store tabular data in a row-and-column format. Spreadsheets are two dimensional but allow flexible organization of data (table content), metadata (captions, hierarchical headers, etc.), and free-form texts organized in ad-hoc ways. Unlike database tables or CSV/JSON tables, where each cell is just a string and a traditional database column may be stored in the horizontal direction, spreadsheets come with rich non-text styles (e.g., font, color, borders, size, etc.), which are meant to enhance readability for users and offer clues for users.

Spreadsheets, such as those in MICROSOFT EXCEL, are commonly recognized as popular end-user programming tools to manipulate tabular data. The intuitive spreadsheet interface combines the power of formula-based computation, with the ability to visually inspect tables. Spreadsheets are widely used by billions of non-technical users (e.g., the average enterprise users), who are typically neither database experts nor professional programmers.

Despite the popularity of spreadsheets, authoring formulas in spreadsheets remains to be a key pain point for non-technical users. Spreadsheets blend both data and code/formulas, in the same two-dimensional grid, where formulas are programmed at the granularity of individual cells (e.g., the formula in a cell can often be different from the formula in the neighboring cell). In order to create any non-trivial formula (beyond average (AVG()) and (SUM()) in spreadsheets), users first need to look for relevant functions, and understand the function syntax from reading documentations, which is non-trivial and close to actual programming that typically is performed by developers.

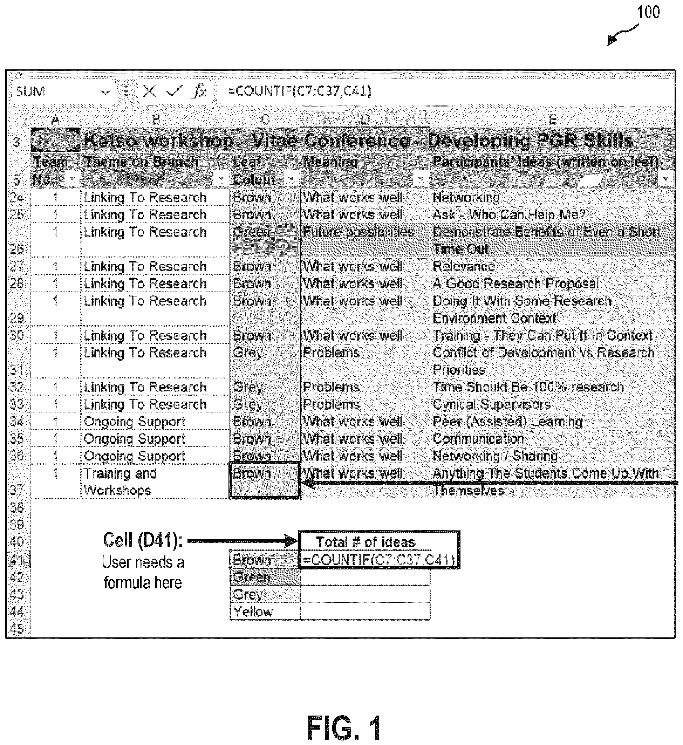

Fig. 1 illustrates an example spreadsheet 100 where a user is trying to author a new formula in a cell D41 with the intent to count the number of occurrences of the value displayed to the left ("Brown", in cell C41), within the column from the cell C7 to C37. The ground truth formula is therefore "=COUNTIF(C7:C37,C41)", which however is non-trivial for users to write, because COUNTIF() and its syntax is not something that an average non-technical user is familiar with. While the example in Fig. 1 illustrates just one function (COUNTIF), typically users in practice are trying to create formulas that have multiple functions with multiple parameters, each of which needs to be programmed correctly, and then stringed together appropriately, making the task of authoring formulas in spreadsheets clearly challenging.

Existing solutions try to predict formulas in a user-specified target cell based on surrounding Natural Language (NL) context. If the row label or column header of the target cell is "Total" or "Aggregate," the existing solutions use the row labels or column headers to determine that the desired formula will likely involve the function SUM () for the corresponding row or column. However, formulas with multiple parameters (e.g., COUNTIF() with two parameters) is difficult to infer from the natural language context alone, because even as humans, we may not be able to correctly guess this COUNTIF() formula by looking at the surrounding NL-context alone (without knowing the actual intent of the user for a formula in Cell D41). Existing solutions tend to have low accuracy in predicting formulas and are limited to predicting short formulas.

The present disclosure provides methods and systems that accurately predicts formulas that users want to author in a target spreadsheet cell by learning and adapting formulas that already exist in similar spreadsheets. The present disclosure includes a number of practical applications that provide benefits and/or solve problems associated with formulas in spreadsheets. Examples of these applications and benefits are discussed in further detail below.

The methods and systems represent spreadsheets and spreadsheets regions in a similar manner as images, where each cell is represented similar to a pixel. The methods and systems develop deep learning machine learning models to learn suitable dense vector representations for both spreadsheets and spreadsheet regions. Using the vector representation of spreadsheets and spreadsheet regions, the methods and systems can quickly find both similar spreadsheets and similar spreadsheet regions. In some implementations, the methods and systems use approximate nearest neighbor (ANN) searches for vectors.

The methods and systems identify similar reference spreadsheets to a target spreadsheet. A target spreadsheet is a spreadsheet currently edited by users. A reference spreadsheet is an existing spreadsheet. In some implementations, the reference spreadsheets are existing spreadsheets within an organization. The methods and systems use a trained machine learning model to identify the similar reference spreadsheets.

One example use of the methods and systems of the present disclosure is automatically identifying similar spreadsheets in a corpus of spreadsheets (e.g., a collection of spreadsheets for an entity) to a target spreadsheet and performing downstream tasks on the similar spreadsheets. One example task is automatically marking similar spreadsheets with a same category or label as a target spreadsheet. For example, a user identifies a target spreadsheet as confidential, the methods and systems automatically identify other similar spreadsheets in the corpus and automatically apply a confidential label to the identified similar spreadsheets. Instead of the user manually labeling or identifying other spreadsheets as confidential, the methods and systems automatically identify similar spreadsheets and automatically indicate that the similar spreadsheets are confidential. Another example task is setting user access permissions for accessing a spreadsheet. For example, an accounting group of a company (e.g., a subset of users) are assigned access permissions to the financial report spreadsheets of the company. A user may access a financial report spreadsheet and the methods and systems may automatically identify similar spreadsheets in the company's spreadsheets to the financial report spreadsheet and automatically set the user access permissions to the similar spreadsheets to the subset of users in the financial group of the company. The methods and systems may aid users in quickly identifying spreadsheets the users have permission to access.

The methods and systems may also identify similar reference regions to a target cell. A cell is the intersection of a row and a column in a spreadsheet (where a row and column meet). Columns are identified by letters (A, B, C, etc.) and rows are identified by numbers (1, 2, 3, etc.). Each cell has its own name or cell address based on its column and row. A region is one or more cells within a spreadsheet. A target region is a region (one or more cells) within a target spreadsheet. A reference region is a region (one or more cells) within an existing spreadsheet. A target cell is a cell within a spreadsheet in which a user wants to create a formula. A formula is a user-programmed expression in a cell, which consists of functions and parameters to these functions, which are often cell-locations, such as "B5," that refer to data in other cells within the spreadsheet. The methods and systems use a trained machine learning model to identify similar reference regions to a target cell.

The methods and systems identify formulas within the similar reference cells from the similar spreadsheets and automatically adapt the formulas to the target cell as a predicted formula for the target cell. The methods and systems use a trained machine learning model to identify and adapt the formulas from the similar reference cells to the predicted formula for the target cell.

The methods and systems provide a formula recommendation with the predicted formula to the user. In some implementations, the methods and systems automatically insert the predicted formula in the target cell. The user may accept the predicted formula or modify the predicted formula.

One technical advantage of the systems and methods of the present disclosure is improved quality in the predicted formula. The methods and systems use more training examples to train the machine learning models, resulting in a more accurate machine learning model and a machine learning model that provides better precision and recall. Another technical advantage of the systems and methods of the present disclosure is an efficiency optimization. The systems and methods of the present disclosure produce an embedding of a vector representation of the spreadsheet or spreadsheet region and use the embeddings to identify similar spreadsheets or spreadsheet regions quickly and efficiently.

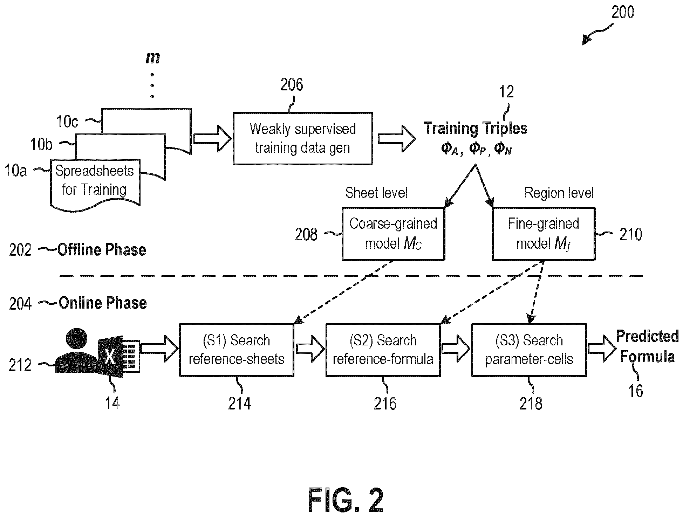

Referring now to Fig. 2, illustrated is an example environment 200 for automatically recommending formulas for a spreadsheet. The environment 200 includes an offline phase 202 for training a plurality of machine learning models (e.g., the machine learning model 206, the machine learning model 208, and the machine learning model 210) for identifying similar spreadsheets and similar regions of spreadsheets. The offline phase 202 automatically trains the machine learning model 206 to generate training examples of similar vs. dissimilar spreadsheets, from a plurality of spreadsheets (e.g., spreadsheets 10a, 10b, 10c up to *n*, where *n* is a positive integer), using weak supervision. In some implementations, the plurality of spreadsheets (e.g., spreadsheets 10a, 10b, 10c) are obtained from publicly available databases. One example use case includes crawling the internet and using 160,000 spreadsheets as the plurality of spreadsheets. Any number of spreadsheets may be used by the machine learning model 206 to automatically generate the training examples using weak supervision.

In some implementations, the machine learning model 206 uses the sheet names of the spreadsheets to determine whether the spreadsheets are similar or dis-similar to each other. Each spreadsheet file typically contains multiple sheets, where each sheet has a name and each sheet is a two-dimension grid, similar to a traditional table. The machine learning model 206 compares the sheet names of a pair of spreadsheet files to determine whether the pair of spreadsheet files are similar or dis-similar to each other.

For example, when two spreadsheet files ($F$ and $F'$) contain multiple sheets (s and s'), denoted as $F = (s_1, s_2, \ldots s_n)$ and $F' = (s'_1, s'_2, \ldots s'_n)$, and all the names of these sheets match exactly 1-to-1 with each other, or $name(s_i) = name(s'_i)$, $\forall i \in [n]$, then these two files ($F$ and $F'$), as well as their corresponding sheets ($s_i$ and $s'_i$), are likely to be similar. However, if the sheet names share identical names (a match occurs between the sheet names), it does not mean that the two spreadsheets ($F$ and $F'$) must be similar. For example, if the sheets have a default name (e.g., sheet1) or a common name, there may not be enough information based on name of the sheets for the machine learning model 206 to use in determining whether the spreadsheets are similar or dis-similar. If a match does not occur between the names of the sheets, the corresponding sheets are likely to be dis-similar.

In some implementations, the machine learning model 206 uses a weak supervision hypothesis test to model the probabilities of seeing different sequences of sheet-names (common vs. rare names, long vs. short sequences) to use in determining whether sheet names are common sheet names or rare sheet names. The hypothesis test includes a null hypothesis $H_0$ that states that two given spreadsheets $F$ and $F'$ are not similar (a default position that should apply in the majority of cases), and for the sheet-names of ($s_1, s_2, \ldots s_n$) and ($s'_1, s'_2, \ldots s'_n$) to match is a just coincidence. The hypothesis test explicitly models the probabilistic process of drawing two sequences of sheets ($s_1, s_2, \ldots s_n$) and ($s'_1, s'_2, \ldots s'_n$) from a universe of sheet-names. If the machine learning model 206 determines the probability of two given sequences of names to collide is exceedingly small (e.g., smaller than typical $\alpha$ thresholds, such as, 0.05), the machine learning model 206 rejects the null hypothesis ($H_0$) and concludes that this is not a coincidence, the two files $F$ and $F'$, as well as their sheets, are likely similar.

An example equation that the machine learning model 206 uses in determining whether sheet names are common sheet names or less common sheet names is illustrated below in equation (1):

$$(1) \quad p_i = \frac{freq_U(name(s_i))}{|U|}$$

where $p_i = Pr(name(s_i))$ is the probability of encountering the sheet-name $name(s_i)$, when a random spreadsheet is drawn from all sheets in the universe, $U$ is the universe of all spreadsheets, $freq_U(name(s_i))$ is the frequency of $name(s_i)$ in all spreadsheets in $U$, and $|U|$ is the total number of spreadsheets.

Given two sequences of sheets ($s_1, s_2, \ldots s_n$) and ($s'_1, s'_2, \ldots s'_n$), the chance of seeing the sheet-names in the second to match exactly with the first may be calculated by the machine learning model 206 as $\Pi_{i \in [n]} p_i$ (because each time a spreadsheet $s'_i$ is drawn, the probability that its name matches the name from the first sequence, $name(s_i)$, is $p_i$, $\forall i \in [n]$). Under the null-hypothesis, if the machine learning model 206 finds the probability of two sequences of sheets sharing identical names, $\Pi_{i \in [n]} p_i$, to be exceedingly small, e.g., smaller than the typical alpha of 0.05, the machine learning model 206 rejects $H_0$ and concludes that ($s_i$, $s'_i$) are similar sheets, for all $i \in [n]$.

**In** some implementations, the machine learning model 206 uses the hypothesis test as weak-supervision to automatically generate positive and negative training pairs for similar and dis-similar sheets. To generate positive examples for similar sheets, the machine learning model 206 checks pairs of spreadsheet files ($F$, $F'$), whose sequences of sheets ($s_1, s_2, \ldots s_n$) and ($s'_1, s'_2, \ldots s'_n$) have identical names. The machine learning model 206 marks all ($s_i$, $s'_i$) $\forall i \in [n]$ as positive examples (similar sheets), if $\Pi_{i \in [n]} p_i \leq \alpha$, (e.g., $\alpha = 0.05$), and rejects $H_0$.

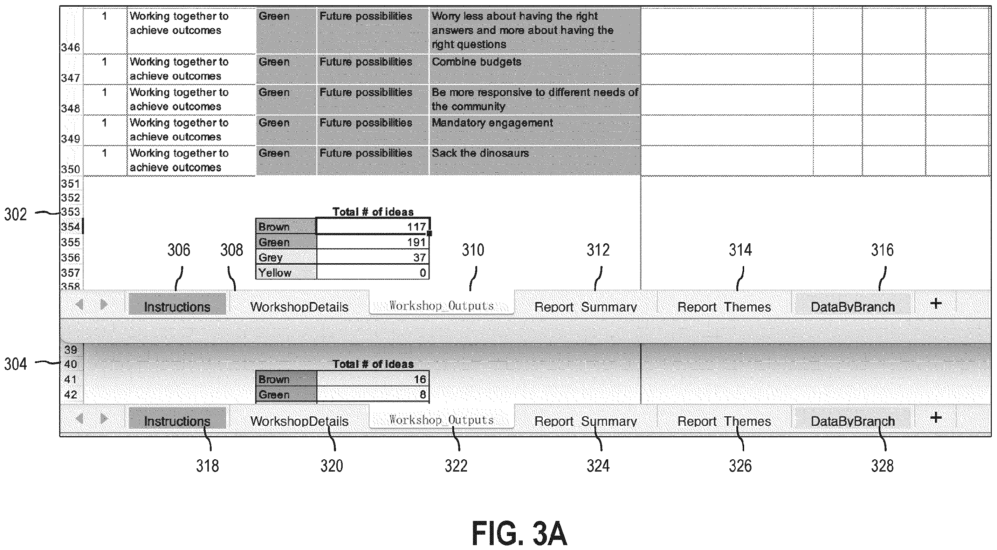

Fig. 3A illustrates an example of a high confidence of similar sheets between a pair of spreadsheets (the spreadsheet 302 and the spreadsheet 304) with the same sheet names. The spreadsheet 302 includes a sheet 306 with a sheet name "Instructions," a sheet 308 with a sheet name "WorkshopDetails," a sheet 310 with a sheet name "Workshop _Outputs," a sheet 312 with a sheet name "Report Summary," a sheet 314 with a sheet name "Report Theme," and a sheet 316 with a sheet name "DataByBranch." The spreadsheet 304 includes a sheet 318 with a sheet name "Instructions," a sheet 320 with a sheet name "WorkshopDetails," a sheet 322 with a sheet name "Workshop _Outputs," a sheet 324 with a sheet name "Report Summary," a sheet 326 with a sheet name "Report Theme," and a sheet 328 with a sheet name "DataByBranch."

In the illustrated example, the sequence of sheets (e.g., the sheets 306, 308, 310, 314, 316 and the sheets 318, 320, 322, 324, 326, 328) have identical sheet names for the pair of spreadsheets 302, 304 in the same order. For example, the sheet names of the first sheets (e.g., the sheet 306 and the sheet 318) are the same (e.g., "Instructions), the sheet names of the second sheets (e.g., the sheet 308 and the sheet 320) are the same (e.g., "WorkshopDetails"), the sheet names of the third sheets (e.g., the sheet 310 and the sheet 322) are the same (e.g., "Workshop _Outputs), the sheet names of the fourth sheets (e.g., the sheet 312 and the sheet 324) are the same (e.g., "Report Summary"), the sheet names of the fifth sheets (e.g., the sheet 314 and the sheet 326) are the same (e.g., "Report Themes"), and the sheet names of the sixth sheets (e.g., the sheet 316 and the sheet 328) are the same (e.g., "DatabyBranch").

The machine learning model 206 (Fig. 2) uses equation (1) (Fig. 2) to automatically determine a probability of drawing a random sheet from a universe of sheets with the sheet names and uses the null-hypothesis test on the probability to determine whether the pair of spreadsheets 302, 304 are similar or dis-similar. The machine learning model 206 uses the equation (1) to identify whether the sheet names are common or uncommon. The machine learning 206 aggregates the probability of the sheet names and determines whether the aggregated probability is less than 0.05 (e.g., an uncommon sheet name) or greater than or equal to 0.05 (e.g., a common sheet name).

For example, the machine learning model 206 determines that the sheet name "Instructions" occurs 100 times for a universe of 100,000 spreadsheets, so the probability of drawing a random sheet from the universe and seeing the name "Instructions" is 0.1% (100/100,000). Another example includes the machine learning model 206 determines that the sheet name "WorkshopDetails" occurs 10 times in total, so the probability is 0.0001% (10/100,000), which indicates that the sheet name "WorkshopDetails" is less common as compared to the sheet name "Instructions." The machine learning model determines that the aggregated probability of the sheet names is less than 0.05, rejects the null-hypothesis ($H_0$), and concludes that the two sequence of sheets from the pair of spreadsheets 302, 304 are similar. The machine learning model 206 uses the pair of spreadsheets (the spreadsheet 302 and the spreadsheet 304) as a positive example of a training pair of spreadsheets (e.g., similar spreadsheets).

Referring to Fig. 2, to generate negative examples for similar sheets, the machine learning model 206 samples two random sheets as negative examples, because the chance of collision (the two sheets being similar) in a large spreadsheet corpus is small. The machine learning model 206 samples pairs of spreadsheet files ($F$, $F'$), and only if the two sets of sheets ($s_1$, $s_2$, ... $s_n$) and ($s'_1$, $s'_2$, ... $s'_n$) do not share any common sheet-names, the machine learning model 206 uses pairs of ($s_i$, $s'_j$) as negative examples (dis-similar sheets).

In some implementations, the machine learning model 206 uses pairs of spreadsheets as a negative example (dis-similar sheets) if the sheets have a default name (e.g., sheet1) or a common name that are the same. The machine learning model 206 may not have enough information to reject the null hypothesis.

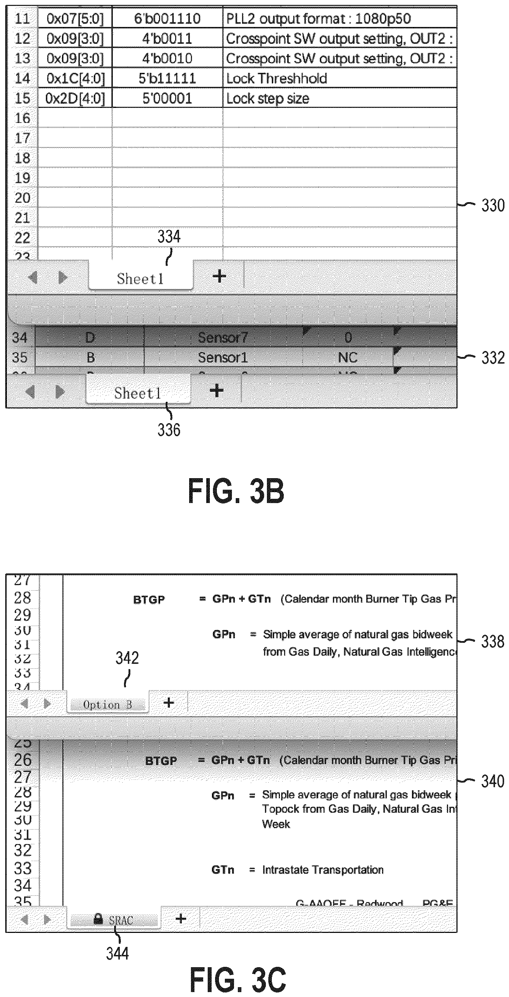

Fig. 3B illustrates an example of a low confidence of similar sheets between a pair of spreadsheets (the spreadsheet 330 and the spreadsheet 332) with the same sheet names. The spreadsheet 330 includes a sheet 334 with a sheet name "Sheet1" and the spreadsheet 332 includes a sheet 336 with a sheet name "Sheet1." The machine learning model 206 (Fig. 2) uses equation (1) (Fig. 2) to automatically determine a probability of drawing a random sheet from a universe of sheets with the sheet name "Sheet1" and uses the probability to identify whether the sheet name "Sheet1" is a common sheet name or an uncommon sheet name.

For example, the machine learning model 206 determines the sheet name "Sheet1" occurs 15,000 times out of a total of 100,000 spreadsheets and the probability value for the sheet name "Sheet1" is 15,000/100,000 (0.15%). The machine learning model 206 compares the probability value of the sheet name (e.g., 0.15) and determines that 0.15 is greater than 0.05 and keeps the null-hypothesis ($H_0$) (e.g., the machine learning model 206 has low confidence that the spreadsheets 330, 332 are similar). The machine learning model 206 concludes that the two sequence of sheets from the pair of spreadsheets 330, 332 are dis-similar spreadsheets and uses the pair of spreadsheets (the spreadsheet 330 and the spreadsheet 332) as an example of a negative training pair of spreadsheets (e.g., dis-similar spreadsheets).

Fig. 3C illustrates an example of a low confidence of similar sheets between a pair of spreadsheets (the spreadsheet 338 and the spreadsheet 340) with different sheet names. The spreadsheet 338 includes a sheet name "Option B" and the spreadsheet 340 includes a sheet name "SRAC." The pair of spreadsheets (the spreadsheet 338 and the spreadsheet 340) have different sheet names. The machine learning model 206 uses weak supervision and determines that the pair of spreadsheets (the spreadsheet 338 and the spreadsheet 340) are dis-similar to one another in response to determining that the sheet name "Option B" and the sheet name "SRAC" are different. The machine learning model 206 identifies the pair of spreadsheets (the spreadsheet 338 and the spreadsheet 340) as an example of a negative training pair of spreadsheets (e.g., dis-similar spreadsheets).

Referring back to Fig. 2, to generate positive example of similar regions of spreadsheet files, the machine learning model 206 takes a pair of similar sheets ($s_i$, $s'_i$), and checks for all formulas on $s_i$ and $s'_i$. For example, if formula $f \in s_i$ and $f' \in s'_i$, where the locations of $f$ and $f'$ are identical, or $Loc(f) = Loc(f')$ (e.g., one is in B59 of $s_i$ while the other is also in B59 of $s'_i$), and their formula-expressions are also identical, or $f = f'$ (e.g., both are SUM(A12:B40)), the machine learning model 206 has a high confidence that the regions surrounding $Loc(f)$ and $Loc(f')$ are similar-regions, which the machine learning model 206 uses as positive examples.

To generate negative examples for similar-regions (regions that are dis-similar), the machine learning model 206 takes the positive examples ($Loc(f)$, $Loc(f')$) determined for the similar regions, and shifts one of the locations $Loc(f')$ until the location hits a different formula $g$ with $g \neq f$, which is when the machine learning model 206 stops and marks ($Loc(f)$, $Loc(g)$) as a negative example for similar-region. The weak supervision based on the hypothesis tests when applied to a spreadsheet corpus automatically generates large amounts of positive and negative examples for similar sheets and/or similar regions of spreadsheets.

The machine learning model 206 outputs training triples 12 that include positive and negative examples that correspond to similar and dis-similar sheets and/or regions of spreadsheet files. In some implementations, the training triples 12 include triplet examples (A, P, N), where A is an anchor (a reference spreadsheet), P is a positive example to the anchor (a similar spreadsheet), and N is a negative example to the anchor (a dis-similar spreadsheet). For example, the machine learning model 206 uses the below equation (2) to generate the training triples 12.

$$(2) \qquad l_{triplet} = max(\|\phi_A - \phi_P\|^2 - \|\phi_A - \phi_N\|^2 + m, 0)$$

where $(A, P, N)$ are three spreadsheet-regions, with $(A, P)$ being a pair of automatically generated positive examples using weak supervision, $(A, N)$ is a pair of negative examples generated using the weak supervision, and m refers to margin, which is a hyperparameter that encourages the machine learning model 206 to continue to push negative examples $N$ further away from positive examples $P$, relative to anchor $A$, until there is a safe marginm to differentiate the two. $\|\phi A - \phi P\|^2$ measures the $L_2$ distance between the representations for the two positive examples $\phi A$ and $\phi P$, which after training is small, while $\|\phi A - \phi N\|^2$ is the $L_2$ distance between two negative examples, which is large.

In some implementations, the machine learning model 206 uses the below Algorithm (1) for the training.

---

**Algorithm 1: Offline training**

**Input**: A large corpus of spreadsheets S
**Output**: Coase-grained model $M_c$, Fine-grained model $M_f$

1. Initialize $M_c$, $M_f$ with random parameters.
2. $Pr_{s_p}, Pr_{s_N}, Pr_{r_p}, Pr_{r_N} = TrainDataGen(S)$
3. **for** each episode $\in [1, T]$ **do**
4. $\quad (\phi_{c_A}, \phi_{c_p}, \phi_{c_N}) = SHSample(Pair_{s_p}, Pair_{s_N}, M_c)$
5. $\quad (\phi_{f_A}, \phi_{f_p}, \phi_{f_N}) = SHSample(Pair_{r_p}, Pair_{r_N}, M_f)$
6. $\quad l_{triplet_c} = max(\|\phi_{c_A} - \phi_{c_p}\|^2 - \|\phi_{c_A} - \phi_{c_N}\|^2 + m, 0)$
7. $\quad l_{triplet_f} = max(\|\phi_{f_A} - \phi_{f_p}\|^2 - \|\phi_{f_A} - \phi_{f_N}\|^2 + m, 0)$
8. $\quad$ Perform SGD training on $M_c$ with $l_{Triplet_c}$.
9. $\quad$ Perform SGD training on $M_f$ with $l_{Triplet_f}$.
10. **end**

---

During each step of the training described in Algorithm (1), the machine learning model 206, continuously selects semi-hard triples $(A, P, N)$ that are the most informative for models to learn, based on the current state of the models. Specifically, the machine learning model 206 samples triples $(A, P, N)$ whose loss satisfies $0 < l_{triplet}(A, P, N) < m$, which ensures that the selected triple $(A, P, N)$ is neither too hard (with loss greater than m), nor too easy (with loss equals 0).

The training triples 12 are used to train the spreadsheet representative models (the machine learning model 208 and the machine learning model 210) so that when the representative models are given a new pair of sheets $(s, s')$ or regions $(Loc(c), Loc(c'))$ of spreadsheets, the spreadsheet representative models may quickly and accurately compute a similarity between the sheets and/or regions. In some implementations, the machine learning model 208 is used to identify whether the pair of sheets are similar or dis-similar and the machine learning model 210 is used to identify whether the pair of regions are similar or dis-similar.

The spreadsheet representation-models (the machine learning model 206 and the machine learning model 210) are universal and applicable to all types of spreadsheets, and therefore, the learning steps happens once during the offline phase 202.

In some implementations, indexes are generated in the offline phase 202 to index the spreadsheets S in an organization. Given a new corpus of spreadsheets S in an organization, the representation models (the machine learning models 208, 210 learned on U) to generate vector representations for each spreadsheet $S \in$ S are provided to the indexes. For example, a similar spreadsheet index is created with similar spreadsheets that is used to quickly find similar spreadsheets in step 214. Another example includes a similar region index is created with similar spreadsheet regions that can be used to quickly find similar regions in steps 216, 218. In some implementations, the indexes are approximate nearest neighbor (ANN) indexes. The indexes aid in efficient and accurate identification of similar spreadsheets and/or spreadsheet regions in the online phase 204.

The environment 200 also includes an online phase 204 that a user 212 accesses when using a target sheet 14 (a spreadsheet currently being edited by the user 212). In some implementations, the online phase 204 is triggered when the user 212 opens the target sheet 14, for example, using an application (e.g., a spreadsheet application) on a device of the user 212 or a browser on the device of the user 212.

The online phase 204 includes a search for reference sheet step 214. The machine learning model 208 (trained in the offline phase 202) searches to identify one or more reference sheets, denoted by $S_R \in S$ (S is the spreadsheet corpus that the user 212 is able to access), that are similar to the target sheet 14 $(S_T)$. The machine learning model 208 uses a similar sheet primitive to identify the one or more reference sheets. In some implementations, the search for reference sheet step 214 occurs in response to the user 212 opening the target sheet 14. The search for reference sheet step 214 may occur prior to the user 212 starting a formula in a target cell of the target sheet 14. For example, the indexes are accessed in response to the user 212 opening the target sheet 14 to automatically identify similar sheets to the target sheet 14.

The online phase 204 also includes a search for reference formula step 216 by similar region. The machine learning model 210 searches within each reference sheet $S_R$ to identify a reference cell $C_R \in S_R$, whose local spreadsheet regions look similar to the local region around the target-cell $C_T$, using a similar region primitive. If $C_R$ contains a formula $F_R$, the reference formula is identified by the machine learning model 210 as a likely candidate for a predicted formula 16. In some implementations, the machine learning model 210 identifies a plurality of reference formulas that are likely candidates for the predicted formula 16 and places the plurality of reference formulas in a ranked order. The machine learning model 210 may take a highest ranked reference formula as the predicted formula.

In some implementations, the search for reference formula step 216 automatically occurs in response to the machine learning model 210 receiving an indication that the user 212 is creating a formula in a target cell. One example indication that the user 212 is creating a formula includes the user 212 typing an equal sign in a target cell. Another example indication that the user 212 is creating a formula includes the user 212 typing a partial formula in a target cell. Another example indication that the user 212 is creating a formula includes the user 212 selecting a create formula option.

The online phase 204 also includes a search parameter cell step 218 by similar region. The machine learning model 210 uses the similar region primitive to adapt the reference formula $(F_R)$, into the local context of the target-sheet $(S_T)$, by changing the parameter cells of the reference formula $(F_R)$. The machine learning model 210 uses the similar-region primitive to learn-to-adapt these parameters from $S_R$ to $S_T$ and output a predicted formula 16 with specific content from the target sheet 14.

The predicted formula 16 is automatically displayed in the target cell. In some implementations, the predicted formula 16 is displayed in response to the user 212 typing the equal sign prior to the user 212 typing any additional information for the formula. In some implementations, the predicted formula 16 is a partial recommendation for the formula. If the user 212 accepts the predicted formula 16, the machine learning model 210 provides a next portion of the predicted formula 16. For example, the user accepts the predicted formula 16 by keeping the predicted formula 16 in the target cell. The user 212 may accept the predicted formula 16 or make any modifications or changes to the predicted formula 16. For example, the user 212 may override the predicted formula 16 by typing in the desired parameters and functions in the target cell.

In some implementations, the user 212 may continue to type a formula in the target cell and the machine learning model 210 updates the predicted formula 16 in response to the changes in the formula as the user 212 is typing. For example, the machine learning model 210 refines the predicted formula 16 based on the prefix the user 212 is typing for the formula. The machine learning model 210 may continue to refine the predicted formula 16 until the user 212 finishes typing the formula in the target cell.

In some implementations, one or more computing devices (e.g., servers and/or devices) are used to perform the processing of the environment 200. The one or more computing devices may include, but are not limited to, server devices, cloud virtual machines, personal computers, a mobile device, such as, a mobile telephone, a smartphone, a PDA, a tablet, or a laptop, and/or a non-mobile device. The features and functionalities discussed herein in connection with the various systems may be implemented on one computing device or across multiple computing devices. For example, the machine learning models 206, 208, 210, the spreadsheet corpus, and the spreadsheet application are implemented wholly on a computing device. Another example includes the machine learning models 206, 208, 210, the spreadsheet corpus, and/or the spreadsheet application implemented wholly on a computing device. Another example includes one or more subcomponents of each of the machine learning models 206, 208, 210, the spreadsheet corpus, and the spreadsheet application implemented across multiple computing devices. Moreover, in some implementations, one or more subcomponent of the machine learning models 206, 208, 210, the spreadsheet corpus, and/or the spreadsheet application may be implemented are processed on different server devices of the same or different cloud computing networks.

In some implementations, each of the components of the environment 200 is in communication with each other using any suitable communication technologies. In addition, while the components of the environment 200 are shown to be separate, any of the components or subcomponents may be combined into fewer components, such as into a single component, or divided into more components as may serve a particular implementation. In some implementations, the components of the environment 200 include hardware, software, or both. For example, the components of the environment 200 may include one or more instructions stored on a computer-readable storage medium and executable by processors of one or more computing devices. When executed by the one or more processors, the computer-executable instructions of one or more computing devices can perform one or more methods described herein. In some implementations, the components of the environment 200 include hardware, such as a special purpose processing device to perform a certain function or group of functions. In some implementations, the components of the environment 200 include a combination of computer-executable instructions and hardware.

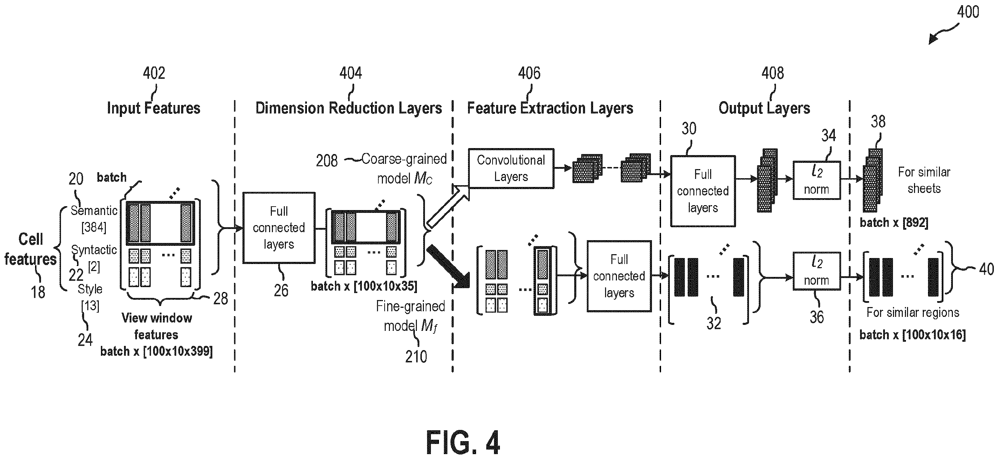

Fig. 4 illustrates an example of a machine learning model architecture 400 for spreadsheet representation to classify spreadsheets and/or spreadsheet regions as similar or dis-similar. The machine learning model architecture 400 is used by the machine learning model 206 (Fig. 2). In some implementations, the machine learning model 206 is a classification machine learning model. The machine learning model architecture 400 includes input features layers 402, dimension reduction layers 404, feature extraction layers 406, and output layers 408.

The input feature layers 402 represent the spreadsheets and the spreadsheet regions as input feature vectors. The input feature vectors are provided to deep neural networks (DNN) machine learning models for representation learning. The input feature layers 402 converts the two-dimensional grids consisting of cells of the spreadsheets or the spreadsheet regions into the input feature vectors. Spreadsheet cells contain content and rich style features (e.g., color, font, font-size, borders, etc.). The input feature layers 402 use content features and style features for each spreadsheet cell to convert the cell features 18 into the input feature vectors (the semantic feature vector 20, the syntactic feature vector 22, the style feature vector 24).

The content features ($\gamma^c$) represent the content in a cell. The content features include semantic and syntactic features. Semantic features are components of a concept associated with a lexical item. The semantic features of the content in the cell help identify a word's meaning. In some implementations, a pre-trained natural language embedding is applied to the content in a cell to produce a vector representation (the semantic feature vector 20) of each cell value. Semantically similar content has embeddings that are close in the semantic feature vector 20 and semantically dissimilar content has embeddings that are further away from each other in the semantic feature vector 20. For example, "USA" and "Canada," are close by in the feature space of the semantic feature vector 20.

The syntactic feature vector 22 represents the data type of each cell (e.g., numeric, text, empty, etc.) as categorical features. The syntactic feature vector 22 also represents the syntactic-patterns of values (e.g., "DDDD-DD-DD" for "2020-01-02") as features. Example syntactic features include numbers in the cell, patterns in the cell, and/or a format of the content in the cell.

The style feature vector 24 represents styles encoded in the spreadsheet cells as a syntactic feature vector 22 ($\gamma^s$). Example style features include background color, font color, font style (bold, italic, etc.), font size, cell size (height and width), boundaries of the cell, and/or a cell without boundaries. The final feature vector ($\gamma(C)$) for each cell (C) of the spreadsheet is a concatenation of $\gamma^c(C)$ and $\gamma^s(C)$.

Spreadsheets may not have table boundaries. For example, there may be multiple irregularly shaped tables on a sheet. In some implementations, a view window 28 with rows ($n_r$) and columns ($n_c$) (where $n$ is a positive integer) is used to represent a surrounding region of a cell (C). One example includes $n_r$ is 100 rows and $n_c$ is 10 columns. The view window 28 may move around in a spreadsheet to represent different regions of the spreadsheet. In some implementations, the view window 28 is centered at the location of a cell (C) in the sheet and is denoted as V(C). In some implementations, the view window 28 represents an entire spreadsheet by starting at a top corner of the spreadsheet.

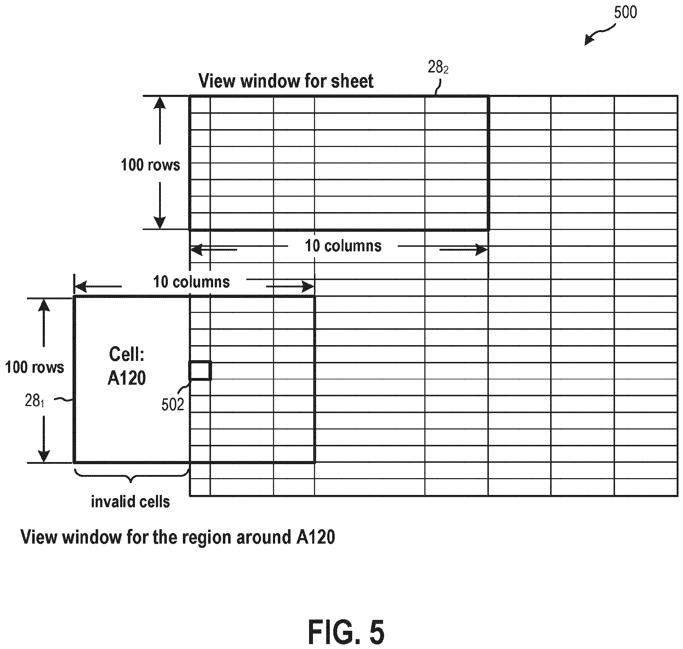

Fig. 5 illustrates example view windows $28_1$, $28_2$ for regions of a spreadsheet 500. The view window $28_1$ represents the surrounding region of a cell 502 (the cell A120). For example, the view window $28_1$ is the ($n_c$ x $n_c$) box (100 rows by 10 columns) centered around the cell A120 (the view window V(A120)). The view window $28_2$ represents an entire spreadsheet using a ($n_r$ x $n_c$) box (100 rows by 10 columns) starting from the top-left corner of a spreadsheet.

Referring back to Fig. 4, the input vector 26 ($\phi_V$) for a view window V, representing a spreadsheet or a spreadsheet region, is the concatenation of the cell-features for all cells in the view window ($\{\gamma(C) \mid \forall C \in V\}$). In some implementations, the cell-features are concatenated using the row-major order of the two-dimension region to produce the input vector 26.

In some implementations, the input vector 26 is a concatenation of different types of features for each cell resulting in hundreds of dimensions. The dimension reduction layers 404 use shared weights for each cell to distill the features from the input vector 26 to use for the spreadsheet representations. In some implementations, the dimension reduction layers 404 are implemented as Multi-Layer Perception (MLP) layers.

The input vector 26 for each cell is provided to the machine learning model 208 and the machine learning model 210 in the feature extraction layers 406. In some implementations, the features identified in the dimension reduction layers 404 are provided in the input vector 26 to the machine learning model 208 and the machine learning model 210.

The machine learning model 208 is trained to identify similar sheets in spreadsheets. In some implementations, the machine learning model 208 is a convolutional neural network that is insensitive to shifts of rows and columns and blurs boundaries between cells to create a representation of the spreadsheets to determine whether the spreadsheets are similar.

The machine learning model 210 is trained to identify similar regions in spreadsheets. In some implementations, the machine learning model 210 has fully connected networks to represent the cell boundaries that the machine learning model 210 uses to identify precise similar regions.

The output of the features extraction layers 406 are dense vector representations of coarse grained views 30 and fine grained views 32 of a spreadsheet region. The output layers 408 perform $L_2$ normalization 34, 36 on the coarse grained views 30 and the fine grained views 32. The resulting dense vectors are used by the machine learning model 208 and the machine learning model 210 to directly compute similarities between two spreadsheets or spreadsheet regions. For example, the vectors 38 are used by the machine learning model 208 to compute similarities between two spreadsheets and the vectors 40 are used by the machine learning model 210 to compute similarities between two spreadsheet regions. In some implementations, the output layers 408 uses the dense vectors produced from the output layers 408 to compute the training triples 12 (Fig. 2). The output of the machine learning model 208 and the machine learning model 210 is whether the spreadsheets and/or spreadsheet regions are similar or dis-similar.

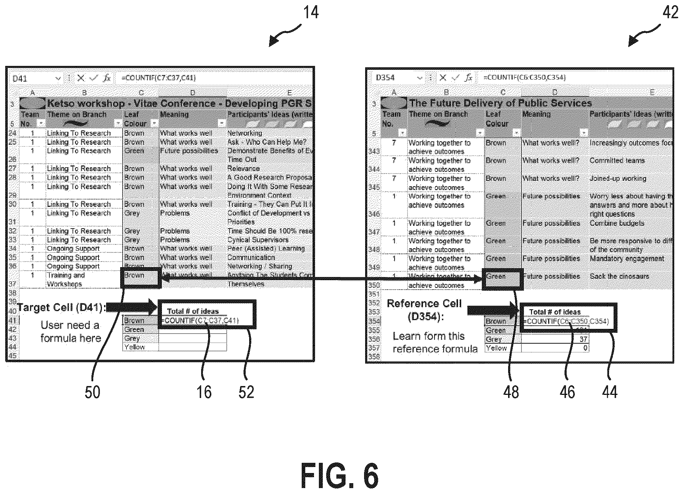

Fig. 6 illustrates an example target sheet 14 of a spreadsheet where a user (e.g., the user 212 (Fig. 2)) is trying to author a new formula in the target cell 52 (D41) and an example reference sheet 42 that is similar to the target sheet 14. The user 212 opens the target sheet 14 and the machine learning model 208 performs the search for reference sheets step 214 (Fig. 2) and identifies the reference sheet 42 as similar to the target sheet 14. The machine learning model 208 searches a spreadsheet corpus, for example, a spreadsheet corpus of an organization of the user 212, to find reference-sheets that look similar to the target sheet 14.

In some implementations, an index is used to quickly identify a similar reference sheet 42. In some implementations, a plurality of similar reference sheets is identified by the machine learning model 208 and the machine learning model 208 selects the reference sheet 42 (e.g., a top ranked reference sheet) from the plurality of similar reference sheets.

The machine learning model 210 (Fig. 2) performs the search for reference-formula step 216 (Fig. 2) in response to determining the user 212 is authoring a formula (e.g., an equal sign is typed or other indication a formula is being created). The machine learning model 210 identifies the reference formula 46 in the reference cell 44 (D354) in response to determining that the region 48 surrounding the reference cell 44 is a similar region to the region 50 surrounding the target cell 52. The machine learning model 210 uses the formula "=COUNTIF(C6:C350,C354)" in the reference cell 44 as the reference formula 46.

The machine learning model 210 (Fig. 2) performs the search parameter cells step 218 (Fig. 2) and adapts parameters of the reference formula 46 to the context of the target cell 52 to generate the predicted formula 16. The machine learning model 210 uses a formula template for the reference formula 46 and fills in the parameters of the reference formula 46 using the local context of the target cell 52 to generate the predicted formula 16. The original parameters C6, C350 and C354 in the reference formula 46 are likely to be incorrect for the target cell 52. The machine learning model 210 identifies similar regions in the target sheet 14 (e.g., the regions around C7, C37, and C41 of the target sheet 14) that are similar to regions in the reference sheet 42 (e.g., the regions around C6, C37, and C41 of the reference sheet 42) and updates the parameters of the predicted formula 16 using the similar regions of the target sheet 14 (C7, C37, and C41).

The predicted formula 16 is automatically presented in the target cell 52 to the user 212. The user 212 may accept the predicted formula 16. In some implementations, the user 212 may continue typing, changing, or modifying the predicted formula 16.

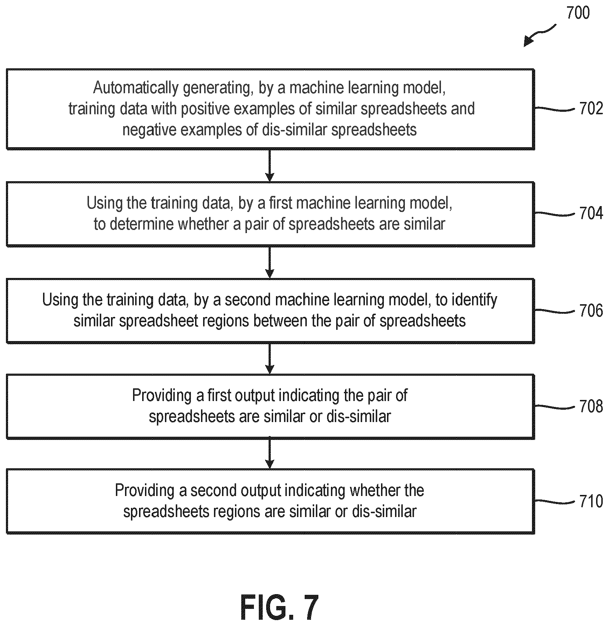

Fig. 7 illustrates an example method 700 for training machine learning models to identify similar spreadsheets or spreadsheet regions. The actions of the method 700 are discussed below with reference to Figs. 2-6.

At 702, the method 700 includes automatically generating, by a machine learning model, training data with positive examples of similar spreadsheets and negative examples of dis-similar spreadsheets. The machine learning model 206 accesses a large number of spreadsheets (e.g., the spreadsheets 10a, 10b, 10c) to automatically generate the training data (e.g., the training triples 12). For example, the machine learning model 206 crawls over 100,000 spreadsheets to automatically generate the training data.

In some implementations, the machine learning model 206 uses the sheet names of the spreadsheets to determine whether the spreadsheets are similar or dis-similar to each other. Each spreadsheet file typically contains multiple sheets, where each sheet has a name and each sheet is a two-dimension grid, similar to a traditional table and the machine learning model 206 compares the sheet names of a pair of spreadsheet files to determine whether the pair of spreadsheet files are similar or dis-similar to each other. The machine learning model 206 uses a weak supervision hypothesis test to compare sheet names of pairs of spreadsheets in the training data and outputs a positive example (the spreadsheets are similar) in response to the sheet names matching and outputs a negative example (the spreadsheets are different) in response to the sheet names having different names. In some implementations, the machine learning model 206 uses a probability of finding the sheet names in the training data and outputs the positive example in response to determining the probability of the sheet names is less common (occurs infrequently) in the training data and outputs the negative example in response to determining the probability of the sheet names is common (occurs frequently) in the training data.

In some implementations, the machine learning 210 takes a pair of similar sheets and checks for all formulas on the similar sheets. If the formulas match, the machine learning model 210 has a high confidence that the regions surrounding the formulas are similar-regions and the machine learning model 206 uses the regions as positive training examples. To generate negative training examples, the machine learning model 206 uses the regions from the positive training examples, shifts the location of one of the sheets until a different formula is identified and marks the regions as a negative example.

In some implementations, the training data is represented as training triples 12 that include positive and negative examples that correspond to similar and dis-similar sheets and/or regions of spreadsheet files. In some implementations, the training triples 12 include triplet examples (A, P, N), where A is an anchor (a reference spreadsheet), P is a positive example to the anchor (a similar spreadsheet), and N is a negative example to the anchor (a dis-similar spreadsheet).

In some implementations, the training data is represented as a plurality of feature vectors with embeddings for each cell of the spreadsheets. For example, the plurality of feature vectors includes a semantic feature vector 20, a syntactic feature vector 22, and a style feature vector 24. The plurality of feature vectors are aggregated together into an input vector 26 for each cell (e.g., the cell 502) of the spreadsheet (e.g., the spreadsheet 500) that represents a region around each cell (e.g., the window $28_1$, $28_2$) of the spreadsheet (e.g., the spreadsheet 500).

At 704, the method 700 includes using the training data, by a first machine learning model, to determine whether a pair of spreadsheets are similar. The training triples 12 are used to train the machine learning model 208 to identify similar spreadsheets so that when the machine learning model 208 is given a new pair of spreadsheets, the machine learning model 208 may quickly and accurately compute a similarity between the sheets. In some implementations, the machine learning model 208 uses the input vector 26 for each cell of a pair of spreadsheets to determine whether a pair of spreadsheets (e.g., the target sheet 14 and the reference sheet 42) are similar.

At 706, the method 700 includes using the training data, by a second machine learning model, to identify similar spreadsheet regions between the pair of spreadsheets. The training data (e.g., the training triples 12) are used to train the machine learning model 210 to identify similar spreadsheet regions so that when the machine learning model 210 is given a new pair of spreadsheets, the machine learning model 210 may quickly and accurately identify similar spreadsheet regions in the pair of spreadsheets. In some implementations, the machine learning model 210 uses the input vector 26 for each cell of a pair of spreadsheets (e.g., the target sheet 14 and the reference sheet 42) to identify similar spreadsheet regions (e.g., the region 48, the region 50) between the pair of spreadsheets.

At 708, the method 700 includes providing a first output indicating the pair of spreadsheets are similar or dis-similar. The machine learning model 208 provides a first output (e.g., the vectors 38) that indicates whether the pair of spreadsheets are similar or dis-similar.

At 710, the method 700 includes providing a second output indicating whether the spreadsheets regions are similar or dis-similar between the pair of spreadsheets. The machine learning model 210 provides a second output (e.g., the vectors 40) that indicates whether the pair of spreadsheets are similar or dis-similar.

The method 700 may optionally include building an index of similar spreadsheets using the first output indicating the pair of spreadsheets are similar and the second output indicating regions of the pair of spreadsheets are similar. For example, a similar spreadsheet index is created with similar spreadsheets that is used to quickly find similar spreadsheets. Another example includes a similar region index is created with similar spreadsheet regions that can be used to quickly find similar regions. In some implementations, the indexes are approximate nearest neighbor (ANN) indexes. The indexes aid in efficient and accurate identification of similar spreadsheets and/or spreadsheet regions.

The method 700 may optionally include receiving a target spreadsheet with a target cell; identifying, using the index, a reference spreadsheet that is similar to the target spreadsheet; identifying, using the second machine learning model, a similar region in the reference spreadsheet to the target cell in response to receiving an indication that a formula is being created in the target cell; identifying, using the second machine learning model, a reference formula in the similar region in the reference spreadsheet; automatically modifying, using the second machine learning model, the reference formula with parameters from the target spreadsheet to generate a predicted formula for the target cell; and providing an output in the target cell with the predicted formula.

The method 700 may optionally include receiving a target spreadsheet; using the index to identify a plurality of similar spreadsheets to the target spreadsheet; and automatically performing a task on the plurality of similar spreadsheets. In some implementations, the task is automatically applying a category to the plurality of similar spreadsheets. For example, thousands of spreadsheets in a company related to travel may be identified in the index as similar and a user may apply a travel category to one of spreadsheets related to travel, the task automatically applies the travel category to the thousands of spreadsheets identified in the index as similar to the spreadsheet that the user labeled as a travel category.

In some implementations, the task is automatically applying a security label to the plurality of similar spreadsheets. For example, a user may identify a spreadsheet as confidential, and the task automatically applies the same confidential label to the plurality of similar spreadsheets identified in the index as similar to the spreadsheet the user marked as confidential. In some implementations, the task is automatically applying access permissions to the plurality of similar spreadsheets. For example, a user may identify a spreadsheet as being accessible by the human resource department and the task automatically applies the access permission (only the human resource department) to the plurality of similar spreadsheets to the spreadsheet.

The method 700 may be used to identify similar spreadsheets and/or spreadsheet regions. In addition, the method 700 may be used to aid in data discovery by automatically identifying similar spreadsheets. The method 700 may be used to automatically identify similar spreadsheets and label similar spreadsheets with a category, access permissions, and/or a security level.

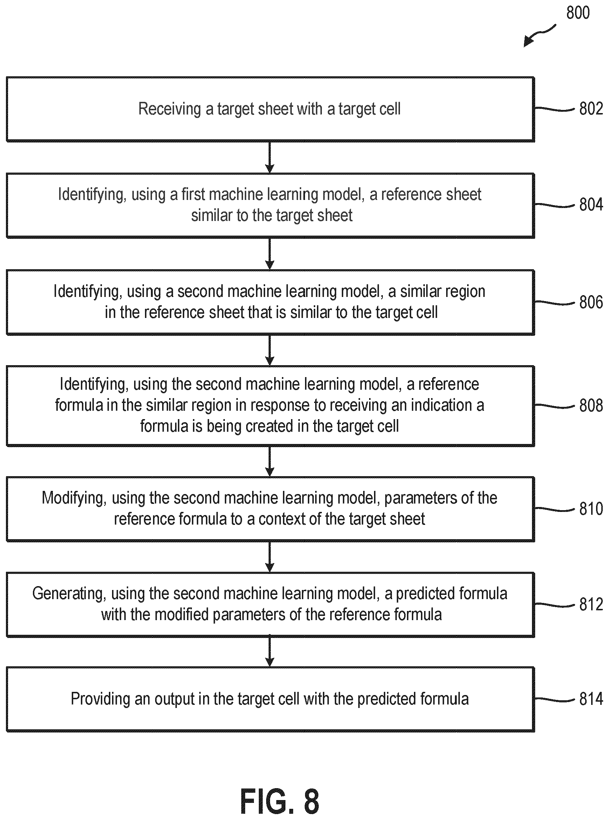

Fig. 8 illustrates an example method 800 for automatically recommending formulas (the predicted formula 16) for a spreadsheet (a target sheet 14). The actions of the method 800 are discussed below with reference to Figs. 2-6.

At 802, the method 800 includes receiving a target spreadsheet with a target cell. The target sheet 14 has a target cell 52. The target sheet 14 is received in response to the user 212 opening or accessing the target sheet 14.

At 804, the method 800 includes identifying, using a first machine learning model, a reference spreadsheet similar to the target spreadsheet. The machine learning model 208 searches to identify one or more reference sheets in a corpus of spreadsheets that are similar to the target sheet 14. The machine learning model 208 uses a similar sheet primitive to identify the one or more reference sheets. In some implementations, the search for reference sheet step 214 by the machine learning model 208 occurs automatically in response to the user 212 opening the target sheet 14. In some implementations, the first machine learning model 208 is trained to identify whether pairs of spreadsheets are similar or dis-similar using training data generated by a weak supervision hypothesis test that compares sheet names of the pair of spreadsheets in determining whether spreadsheets are similar or dis-similar.

At 806, the method 800 includes identifying, using a second machine learning model, a similar region in the reference spreadsheet that is similar to the target cell. The machine learning model 210 searches within each reference sheet (e.g., the reference sheet 42) to identify reference cells (e.g., the reference cell 44) with local spreadsheet regions (e.g., the region 48) that look similar to the local region (e.g., the region 50) around the target cell 52 using a similar region primitive. In some implementations, the second machine learning model 210 is a fully connected network trained to identify whether regions of spreadsheets are similar or dis-similar and trained to identify formulas.

At 808, the method 800 includes identifying, using the second machine learning model, a reference formula in the similar region in response to receiving an indication a formula is being created in the target cell. If the reference cell 44 contains a reference formula (e.g., the reference formula 46), the reference formula is identified by the machine learning model 210 as a likely candidate for a predicted formula 16. In some implementations, the machine learning model 210 identifies a plurality of reference formulas that are likely candidates for the predicted formula 16 and places the plurality of reference formulas in a ranked order. The machine learning model 210 may take a highest ranked reference formula as the predicted formula 16. The search for reference formula step 216 occurs in response to the machine learning model 210 receiving an indication that the user 212 is creating a formula in a target cell. One example indication that the user 212 is creating a formula includes the user 212 typing an equal sign in a target cell. Another example indication that the user 212 is creating a formula includes the user 212 typing a partial formula in a target cell. Another example indication that the user 212 is creating a formula includes the user 212 selecting a create formula option.

At 810, the method 800 includes modifying, using the second machine learning model, parameters of the reference formula to a context of the target spreadsheet. The machine learning model 210 uses the similar region primitive to adapt the reference formula (e.g., the reference formula 46) into a local context of the target sheet 14, by changing the parameter cells of the reference formula. The machine learning model 210 uses the similar-region primitive to learn-to-adapt the parameters from the reference sheet (e.g., the reference sheet 42) to the target sheet 14.

At 812, the method 800 includes generating, using the second machine learning model, a predicted formula with the modified parameters of the reference formula. The machine learning model 210 generates a predicted formula 16 with parameters from the content of the target sheet 14.

At 814, the method 800 includes providing an output in the target cell with the predicted formula. The output automatically presents the predicted formula 16 in the target cell 52. In some implementations, the user 212 accepts the predicted formula 16. In some implementations, the predicted formula 16 is displayed in response to the user 212 typing the equal sign prior to the user 212 typing any additional information for the formula. In some implementations, additional information is received for the formula being created in the target cell 52 and an updated predicted formula 16 is provided in the target cell 52 in response to the receiving the additional information. For example, the user 212 may continue to type in additional parameters for the formula and the predicted formula 16 is updated in response to the additional parameters provided by the user 212.

The method 800 is used to automatically predict formulas that users want to author in a target spreadsheet cell.

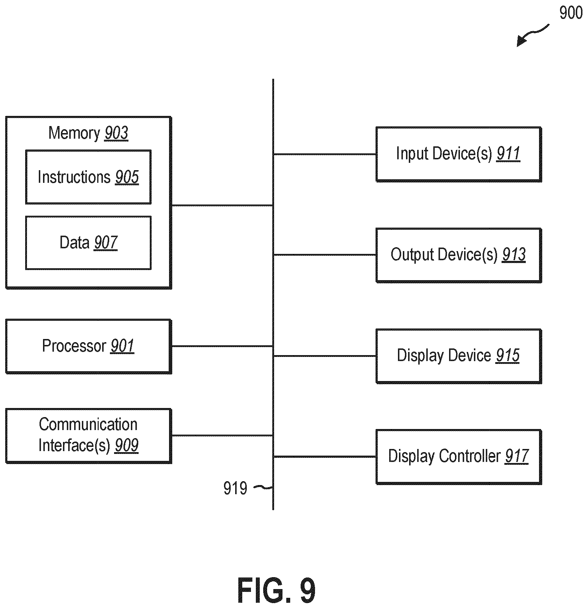

Fig. 9 illustrates components that may be included within a computer system 900. One or more computer systems 900 may be used to implement the various methods, devices, components, and/or systems described herein.

The computer system 900 includes a processor 901. The processor 901 may be a general-purpose single or multi-chip microprocessor (e.g., an Advanced RISC (Reduced Instruction Set Computer) Machine (ARM)), a special purpose microprocessor (e.g., a digital signal processor (DSP)), a graphics processing unit (GPU), a microcontroller, a programmable gate array, etc. The processor 901 may be referred to as a central processing unit (CPU). Although just a single processor 901 is shown in the computer system 900 of Fig. 9, in an alternative configuration, a combination of processors (e.g., an ARM and DSP) could be used.

The computer system 900 also includes memory 903 in electronic communication with the processor 901. The memory 903 may be any electronic component capable of storing electronic information. For example, the memory 903 may be embodied as random access memory (RAM), read-only memory (ROM), magnetic disk storage mediums, optical storage mediums, flash memory devices in RAM, on-board memory included with the processor, erasable programmable read-only memory (EPROM), electrically erasable programmable read-only memory (EEPROM) memory, registers, and so forth, including combinations thereof.

Instructions 905 and data 907 may be stored in the memory 903. The instructions 905 may be executable by the processor 901 to implement some or all of the functionality disclosed herein. Executing the instructions 905 may involve the use of the data 907 that is stored in the memory 903. Any of the various examples of modules and components described herein may be implemented, partially or wholly, as instructions 905 stored in memory 903 and executed by the processor 901. Any of the various examples of data described herein may be among the data 907 that is stored in memory 903 and used during execution of the instructions 905 by the processor 901.

A computer system 900 may also include one or more communication interfaces 909 for communicating with other electronic devices. The communication interface(s) 909 may be based on wired communication technology, wireless communication technology, or both. Some examples of communication interfaces 909 include a Universal Serial Bus (USB), an Ethernet adapter, a wireless adapter that operates in accordance with an Institute of Electrical and Electronics Engineers (IEEE) 802.11 wireless communication protocol, a Bluetooth® wireless communication adapter, and an infrared (IR) communication port.

A computer system 900 may also include one or more input devices 911 and one or more output devices 913. Some examples of input devices 911 include a keyboard, mouse, microphone, remote control device, button, joystick, trackball, touchpad, and lightpen. Some examples of output devices 913 include a speaker and a printer. One specific type of output device that is typically included in a computer system 900 is a display device 915. Display devices 915 used with embodiments disclosed herein may utilize any suitable image projection technology, such as liquid crystal display (LCD), light-emitting diode (LED), gas plasma, electroluminescence, or the like. A display controller 917 may also be provided, for converting data 907 stored in the memory 903 into text, graphics, and/or moving images (as appropriate) shown on the display device 915.

The various components of the computer system 900 may be coupled together by one or more buses, which may include a power bus, a control signal bus, a status signal bus, a data bus, etc. For the sake of clarity, the various buses are illustrated in Fig. 9 as a bus system 919.

In some implementations, the various components of the computer system 900 are implemented as one device. For example, the various components of the computer system 900 are implemented in a mobile phone or tablet. Another example includes the various components of the computer system 900 implemented in a personal computer. Another example includes the various components of the computer system 900 implemented in the cloud.

The disclosure presented herein also encompasses the subject matter set forth in the following clauses.

Example Clause A, a method, comprising: automatically generating, by a machine learning model, training data with positive examples of similar spreadsheets and negative examples of dis-similar spreadsheets; using the training data, by a first machine learning model, to determine whether a pair of spreadsheets are similar; using the training data, by a second machine learning model, to identify similar spreadsheet regions between the pair of spreadsheets; providing a first output indicating the pair of spreadsheets are similar or dis-similar; and providing a second output indicating whether the spreadsheets regions are similar or dis-similar between the pair of spreadsheets.

Example Clause B, the method of Example Clause A, wherein the machine learning model uses a weak supervision hypothesis test to compare sheet names of pairs of spreadsheets in the training data and outputs a positive example in response to the sheet names matching and outputs a negative example in response to the sheet names having different names.

Example Clause C, the method of Example Clause B, wherein the machine learning model further uses a probability of finding the sheet names in the training data and outputs the positive example in response to determining the probability of the sheet names is uncommon in the training data and outputs the negative example in response to determining the probability of the sheet names is common in the training data.

Example Clause D, the method of Example Clause A, wherein the machine learning model accesses a large number of spreadsheets to automatically generate the training data.

Example Clause E, the method of Example Clause A, w wherein the training data is represented as a plurality of feature vectors with embeddings for each cell of the spreadsheets.

Example Clause F, the method of Example Clause E, wherein the plurality of feature vectors include a semantic feature vector, a syntactic feature vector, and a style feature vector.

Example Clause G, the method of Example Clause E, wherein the plurality of feature vectors are aggregated together into an input vector for each cell of the spreadsheets that represents a region around each cell of the spreadsheet.

Example Clause H, the method of Example Clause G, wherein the first machine learning model uses the input vector for each cell to determine whether the pair of spreadsheets are similar and the second machine learning model uses the input vector for each cell to identify the similar spreadsheet regions between the pair of spreadsheets.

Example Clause I, the method of Example Clause A, further comprising:
building an index of similar spreadsheets using the first output indicating the pair of spreadsheets are similar and the second output indicating regions of the pair of spreadsheets are similar.

Example Clause J, the method of Example Clause I, further comprising:
receiving a target sheet with a target cell; identifying, using the index, a reference sheet that is similar to the target sheet; identifying, using the second machine learning model, a similar region in the reference sheet to the target cell in response to receiving an indication that a formula is being created in the target cell; identifying, using the second machine learning model, a reference formula in the similar region in the reference sheet; automatically modifying, using the second machine learning model, the reference formula with parameters from the target sheet to generate a predicted formula for the target cell; and providing an output in the target cell with the predicted formula.

Example Clause K, the method of Example Clause I, further comprising:
receiving a target sheet; using the index to identify a plurality of similar spreadsheets to the target sheet; and automatically performing a task on the plurality of similar spreadsheets.

Example Clause L, the method of Example Clause K, wherein the task is automatically applying a category to the plurality of similar spreadsheets.

Example Clause M, the method of Example Clause K, wherein the task is automatically applying a security label to the plurality of similar spreadsheets.

Example Clause N, the method of Example Clause K, wherein the task is automatically applying access permissions to the plurality of similar spreadsheets.

Example Clause O, a method, comprising: receiving a target sheet with a target cell; identifying, using a first machine learning model, a reference sheet similar to the target sheet; identifying, using a second machine learning model, a similar region in the reference sheet that is similar to the target cell; identifying, using the second machine learning model, a reference formula in the similar region in response to receiving an indication a formula is being created in the target cell; modifying, using the second machine learning model, parameters of the reference formula to a context of the target sheet; generating, using the second machine learning model, a predicted formula with the modified parameters of the reference formula; and providing an output in the target cell with the predicted formula.

Example Clause P, the method of Example Clause O, wherein the output automatically presents the predicted formula in the target cell.

Example Clause Q, the method of Example Clause O, wherein a user accepts the predicted formula.

Example Clause R, the method of Example Clause O, further comprising:
receiving additional information for the formula being created in the target cell; and providing an updated predicted formula in the target cell in response to receiving the additional information.

Example Clause S, the method of claim O, wherein the first machine learning model is trained to identify whether pairs of spreadsheets are similar or dis-similar using training data generated by a weak supervision hypothesis test that compares sheet names of the pair of spreadsheets in determining whether the pairs of spreadsheets are similar or dis-similar.

Example Clause T, the method of claim O, wherein the second machine learning model is a fully connected network trained to identify whether regions of spreadsheets are similar or dis-similar and trained to identify formulas.

The methods and systems provided herein that automatically identify similar spreadsheets to target spreadsheets. The methods and systems automatically predict formulas that users want to author in a target cell of a target spreadsheet by identifying a reference formula from a similar region in a similar reference sheet that is similar to the target cell. The methods and systems generate a predicted formula by adapting parameters of a reference formula to a context of the target cell. The methods and systems provide an output with the predicted formula in the target cell of the target spreadsheet.

As illustrated in the foregoing discussion, the present disclosure utilizes a variety of terms to describe features and advantages of the model evaluation system. Additional detail is now provided regarding the meaning of such terms. For example, as used herein, a "machine learning model" refers to a computer algorithm or model (e.g., a classification model, a clustering model, a regression model, a language model, an object detection model, a probabilistic graphical model) that can be tuned (e.g., trained) based on training input to approximate unknown functions. For example, a machine learning model may refer to a neural network (e.g., a convolutional neural network (CNN), deep neural network (DNN), recurrent neural network (RNN)), or other machine learning algorithm or architecture that learns and approximates complex functions and generates outputs based on a plurality of inputs provided to the machine learning model. As used herein, a "machine learning system" may refer to one or multiple machine learning models that cooperatively generate one or more outputs based on corresponding inputs. For example, a machine learning system may refer to any system architecture having multiple discrete machine learning components that consider different kinds of information or inputs.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various implementations.

Computer-readable mediums may be any available media that can be accessed by a general purpose or special purpose computer system. Computer-readable mediums that store computer-executable instructions are non-transitory computer-readable storage media (devices). Computer-readable mediums that carry computer-executable instructions are transmission media. Thus, by way of example, and not limitation, implementations of the disclosure can comprise at least two distinctly different kinds of computer-readable mediums: non-transitory computer-readable storage media (devices) and transmission media.

As used herein, non-transitory computer-readable storage mediums (devices) may include RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, a datastore, or another data structure), ascertaining and the like. Also, "determining" can include receiving (e.g., receiving information), accessing (e.g., accessing data in a memory) and the like. Also, "determining" can include resolving, selecting, choosing, establishing, predicting, inferring, and the like.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one implementation" or "an implementation" of the present disclosure are not intended to be interpreted as excluding the existence of additional implementations that also incorporate the recited features. For example, any element described in relation to an implementation herein may be combinable with any element of any other implementation described herein. Numbers, percentages, ratios, or other values stated herein are intended to include that value, and also other values that are "about" or "approximately" the stated value, as would be appreciated by one of ordinary skill in the art encompassed by implementations of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01 % of a stated value.

A person having ordinary skill in the art should realize in view of the present disclosure that equivalent constructions do not depart from the scope of the present disclosure, and that various changes, substitutions, and alterations may be made to implementations disclosed herein without departing from the scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the implementations that falls within the meaning and scope of the claims is to be embraced by the claims.

The present disclosure may be embodied in other specific forms without departing from its characteristics. The described implementations are to be considered as illustrative and not restrictive. The scope of the disclosure is, therefore, indicated by the appended claims rather than by the foregoing description. Changes that come within the meaning and range of equivalency of the claims are to be embraced within their scope.

**Claims**

1. A method, comprising:

   automatically generating (702), by a machine learning model (206), training data (12) with positive examples of similar spreadsheets and negative examples of dis-similar spreadsheets;
   using (704) the training data (12), by a first machine learning model (208), to determine whether a pair of spreadsheets are similar;
   using (706) the training data (12), by a second machine learning model (210), to identify similar spreadsheet regions between the pair of spreadsheets;
   providing (708) a first output (38) indicating the pair of spreadsheets are similar or dis-similar; and
   providing (710) a second output (40) indicating whether the spreadsheets regions are similar or dis-similar between the pair of spreadsheets.

2. The method of claim 1, wherein the machine learning model uses a weak supervision hypothesis test to compare sheet names of pairs of spreadsheets in the training data and outputs a positive example in response to the sheet names matching and outputs a negative example in response to the sheet names having different names, and wherein the machine learning model further uses a probability of finding the sheet names in the training data and outputs the positive example in response to determining the probability of the sheet names is uncommon in the training data and outputs the negative example in response to determining the probability of the sheet names is common in the training data.

3. The method of claim 1, wherein the machine learning model accesses a large number of spreadsheets to automatically generate the training data.

4. The method of claim 1, wherein the training data is represented as a plurality of feature vectors with embeddings for each cell of the spreadsheets and the plurality of feature vectors include a semantic feature vector, a syntactic feature vector, and a style feature vector.

5. The method of claim 4, wherein the plurality of feature vectors are aggregated together into an input vector for each cell of the spreadsheets that represents a region around each cell of the spreadsheet, and wherein the first machine learning model uses the input vector for each cell to determine whether the pair of spreadsheets are similar and the second machine learning model uses the input vector for each cell to identify the similar spreadsheet regions between the pair of spreadsheets.

6. The method of claim 1, further comprising:
   building an index of similar spreadsheets using the first output indicating the pair of spreadsheets are similar and the second output indicating regions of the pair of spreadsheets are similar.

7. The method of claim 6, further comprising:

   receiving a target sheet with a target cell;
   identifying, using the index, a reference sheet that is similar to the target sheet;
   identifying, using the second machine learning model, a similar region in the reference sheet to the target cell in response to receiving an indication that a formula is being created in the target cell;
   identifying, using the second machine learning model, a reference formula in the similar region in the reference sheet;
   automatically modifying, using the second machine learning model, the reference formula with parameters from the target sheet to generate a predicted formula for the target cell; and
   providing an output in the target cell with the predicted formula.

8. The method of claim 6, further comprising:

   receiving a target sheet;
   using the index to identify a plurality of similar spreadsheets to the target sheet; and
   automatically performing a task on the plurality of similar spreadsheets.

9. The method of claim 8, wherein the task is one or more of automatically applying a category to the plurality of similar spreadsheets, automatically applying a security label to the plurality of similar spreadsheets, or automatically applying access permissions to the plurality of similar spreadsheets.

10. A method, comprising:

   receiving (802) a target sheet (14) with a target cell (52);
   identifying (804), using a first machine learning model (208), a reference sheet similar to the target sheet (14);
   identifying (806), using a second machine learning model (210), a similar region in the reference sheet (42) that is similar to the target cell (52);
   identifying (808), using the second machine learning model (210), a reference formula (46) in the similar region in response to receiving an indication a formula is being created in the target cell (52);
   modifying (810), using the second machine learning model (210), parameters of the reference formula (46) to a context of the target sheet;
   generating (812), using the second machine learning model (210), a predicted formula (16) with the modified parameters of the reference formula; and
   providing (814) an output in the target cell (52) with the predicted formula (16).

11. The method of claim 10, wherein the output automatically presents the predicted formula in the target cell.

12. The method of claim 10, wherein a user accepts the predicted formula.

13. The method of claim 10, further comprising:

   receiving additional information for the formula being created in the target cell; and
   providing an updated predicted formula in the target cell in response to receiving the additional information.

14. The method of claim 10, wherein the first machine learning model is trained to identify whether pairs of spreadsheets are similar or dis-similar using training data generated by a weak supervision hypothesis test that compares sheet names of the pair of spreadsheets in determining whether the pairs of spreadsheets are similar or dis-similar.

15. The method of claim 10, wherein the second machine learning model is a fully connected network trained to identify whether regions of spreadsheets are similar or dis-similar and trained to identify formulas.

100

| SUM | ⌄ ⋮ ✕ ✓ fx | =COUNTIF(C7:C37,C41) | | |
|---|---|---|---|---|
| | A | B | C | D | E |

| | Team No. | Theme on Branch | Leaf Colour | Meaning | Participants' Ideas (written on leaf) |
|---|---|---|---|---|---|
| 24 | 1 | Linking To Research | Brown | What works well | Networking |
| 25 | 1 | Linking To Research | Brown | What works well | Ask - Who Can Help Me? |
| 26 | 1 | Linking To Research | Green | Future possibilities | Demonstrate Benefits of Even a Short Time Out |
| 27 | 1 | Linking To Research | Brown | What works well | Relevance |
| 28 | 1 | Linking To Research | Brown | What works well | A Good Research Proposal |
| 29 | 1 | Linking To Research | Brown | What works well | Doing It With Some Research Environment Context |
| 30 | 1 | Linking To Research | Brown | What works well | Training - They Can Put It In Context |
| 31 | 1 | Linking To Research | Grey | Problems | Conflict of Development vs Research Priorities |
| 32 | 1 | Linking To Research | Grey | Problems | Time Should Be 100% research |
| 33 | 1 | Linking To Research | Grey | Problems | Cynical Supervisors |
| 34 | 1 | Ongoing Support | Brown | What works well | Peer (Assisted) Learning |
| 35 | 1 | Ongoing Support | Brown | What works well | Communication |
| 36 | 1 | Ongoing Support | Brown | What works well | Networking / Sharing |
| 37 | 1 | Training and Workshops | Brown | What works well | Anything The Students Come Up With Themselves |
| 38 | | | | | |
| 39 | | | | | |

**Cell (D41):**
User needs a
formula here

| | Total # of ideas |
|---|---|
| Brown | =COUNTIF(C7:C37,C41) |
| Green | |
| Grey | |
| Yellow | |

**FIG. 1**

FIG. 2

**FIG. 3A**

| 11 | 0x07[5:0] | 6'b001110 | PLL2 output format : 1080p50 |
| 12 | 0x09[3:0] | 4'b0011 | Crosspoint SW output setting, OUT2 : |
| 13 | 0x09[3:0] | 4'b0010 | Crosspoint SW output setting, OUT2 : |
| 14 | 0x1C[4:0] | 5'b11111 | Lock Threshhold |
| 15 | 0x2D[4:0] | 5'00001 | Lock step size |
| 16 | | | |
| 17 | | | |
| 18 | | | |
| 19 | | | |
| 20 | | | |
| 21 | | | |
| 22 | | | |
| 23 | | | |

330

334

Sheet1 +

| 34 | D | Sensor7 | 0 |
| 35 | B | Sensor1 | NC |

332

Sheet1 +

336

**FIG. 3B**

| 27 | | | |
| 28 | **BTGP** | = **GPn + GTn** (Calendar month Burner Tip Gas Pr |
| 29 | | | |
| 30 | | **GPn** | = Simple average of natural gas bidweek |
| 31 | | | from Gas Daily, Natural Gas Intelligenc |
| 32 | | | |
| 33 | | | |
| 34 | | | |

338

342

Option 3 +

| 25 | | | |
| 26 | **BTGP** | = **GPn + GTn** (Calendar month Burner Tip Gas Pr |
| 27 | | | |
| 28 | | **GPn** | = Simple average of natural gas bidweek |
| 29 | | | Topock from Gas Daily, Natural Gas In |
| 30 | | | Week |
| 31 | | | |
| 32 | | | |
| 33 | | **GTn** | = Intrastate Transportation |
| 34 | | | |
| 35 | | | G-AAOFF - Redwood PG&F |

340

🔒 SRAC +

344

**FIG. 3C**

FIG. 4

View window for the region around A120

**FIG. 5**

FIG. 6

700

| Automatically generating, by a machine learning model, training data with positive examples of similar spreadsheets and negative examples of dis-similar spreadsheets | 702 |

| Using the training data, by a first machine learning model, to determine whether a pair of spreadsheets are similar | 704 |

| Using the training data, by a second machine learning model, to identify similar spreadsheet regions between the pair of spreadsheets | 706 |

| Providing a first output indicating the pair of spreadsheets are similar or dis-similar | 708 |

| Providing a second output indicating whether the spreadsheets regions are similar or dis-similar | 710 |

## FIG. 7

800

| Receiving a target sheet with a target cell | 802 |

↓

| Identifying, using a first machine learning model, a reference sheet similar to the target sheet | 804 |

↓

| Identifying, using a second machine learning model, a similar region in the reference sheet that is similar to the target cell | 806 |

↓

| Identifying, using the second machine learning model, a reference formula in the similar region in response to receiving an indication a formula is being created in the target cell | 808 |

↓

| Modifying, using the second machine learning model, parameters of the reference formula to a context of the target sheet | 810 |

↓

| Generating, using the second machine learning model, a predicted formula with the modified parameters of the reference formula | 812 |

↓

| Providing an output in the target cell with the predicted formula | 814 |

FIG. 8

900

| Memory *903* |
| --- |
| Instructions *905* |
| Data *907* |

| Processor *901* |
| --- |

| Communication Interface(s) *909* |
| --- |

| Input Device(s) *911* |
| --- |

| Output Device(s) *913* |
| --- |

| Display Device *915* |
| --- |

| Display Controller *917* |
| --- |

919

# FIG. 9

| Europäisches Patentamt<br>European Patent Office<br>Office européen des brevets | **EUROPEAN SEARCH REPORT** | **Application Number**<br>EP 25 16 0393 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/203836 A1 (SINGH RISHABH [US] ET AL) 19 July 2018 (2018-07-19)<br>* abstract *<br>* figures 7,8 *<br>* paragraph [0027] *<br>* paragraph [0015] *<br>- - - - - | 1-15 | INV.<br>G06F40/18<br>G06F40/30 |
| A | DONG HAOYU ET AL: "Table Pre-training: A Survey on Model Architectures, Pre-training Objectives, and Downstream Tasks",<br>PROCEEDINGS OF THE THIRTY-FIRST INTERNATIONAL JOINT CONFERENCE ON ARTIFICIAL INTELLIGENCE,<br>29 April 2022 (2022-04-29), pages 5426-5435, XP093157752,<br>California<br>DOI: 10.24963/ijcai.2022/761<br>ISBN: 978-1-956792-00-3<br>Retrieved from the Internet:<br>URL:https://arxiv.org/pdf/2201.09745><br>* abstract *<br>- - - - - | 1-15 | |
| A | CN 114 676 142 A (JIEU SCIENCE AND TECH CO LTD) 28 June 2022 (2022-06-28)<br>* abstract *<br>- - - - - | 1-15 | **TECHNICAL FIELDS SEARCHED (IPC)**<br><br>G06F |

The present search report has been drawn up for all claims

| Place of search | Date of completion of the search | Examiner |
|---|---|---|
| Berlin | 16 July 2025 | Triest, Johannes |

EPO FORM 1503 03.82 (P04C01)

## ANNEX TO THE EUROPEAN SEARCH REPORT
## ON EUROPEAN PATENT APPLICATION NO.

EP 25 16 0393

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | Publication date | Patent family member(s) | Publication date |
|---|---|---|---|
| US 2018203836 A1 | 19-07-2018 | NONE | |
| CN 114676142 A | 28-06-2022 | NONE | |

EPO FORM P0459

For more details about this annex : see Official Journal of the European Patent Office, No. 12/82